# FASCICULE DE BREVET EUROPEEN

(11) **EP 3 530 908 B1**
(45) Date de publication et mention de la délivrance du brevet: **29.07.2020**
(21) Numéro de dépôt: 19158266.7
(22) Date de dépôt: 20.02.2019
(51) Int. Cl.: F02C 7/228, F02C 7/232, F02C 7/262, F02C 7/264, F02C 9/34, F23K 5/14, F23R 3/28, F23R 3/34, F23R 3/50, F23D 23/00

(54) **CHAMBRE DE COMBUSTION COMPORTANT DEUX TYPES D'INJECTEURS DANS LESQUELS LES ORGANES D'ÉTANCHÉITÉ ONT UN SEUIL D'OUVERTURE DIFFÉRENT**
BRENNKAMMER, DIE ZWEI TYPEN VON INJEKTOREN UMFASST, IN DENEN DIE DICHTUNGSORGANE EINE UNTERSCHIEDLICHE ÖFFNUNGSSCHWELLE BESITZEN
COMBUSTION CHAMBER COMPRISING TWO TYPES OF INJECTORS IN WHICH THE SEALING MEMBERS HAVE A DIFFERENT OPENING THRESHOLD

(30) Priorité: 22.02.2018 FR 1851551
(43) Date de publication de la demande: 28.08.2019
(73) Titulaire: SAFRAN AIRCRAFT ENGINES, 75015 Paris (FR)
(72) Inventeur: GODEL, Guillaume Aurélien, 77550 MOISSY-CRAMAYEL (FR); CHABAILLE, Christophe, 77550 MOISSY-CRAMAYEL (FR); NOEL, Thomas Olivier Marie, 77550 MOISSY-CRAMAYEL (FR)
(74) Mandataire: Brevalex

(56) Documents cités:
- EP-A1- 2 056 023
- WO-A1-2014/135797
- FR-A1- 2 943 119
- FR-A1- 3 011 619
- FR-A1- 3 027 059
- US-A- 4 817 389
- US-A- 5 167 122
- US-A- 5 402 634
- US-A1- 2012 324 895
- US-A1- 2015 377 059

## Description

### DOMAINE TECHNIQUE

L'invention se rapporte au domaine technique général des turbomachines d'aéronef telles que les turboréacteurs et les turbopropulseurs. Elle concerne une chambre de combustion pour turbomachine, comprenant au moins une bougie d'allumage, un injecteur d'un premier type et un injecteur d'un deuxième type.

### ÉTAT DE LA TECHNIQUE ANTÉRIEURE

Une chambre annulaire de combustion de turbomachine comprend deux parois de révolution coaxiales qui s'étendent l'une à l'intérieur de l'autre et qui sont reliées entre elles à leurs extrémités amont par une paroi annulaire de fond de chambre.

La paroi de fond de chambre comporte des ouvertures de montage de systèmes d'injection dans desquels sont engagés des injecteurs de carburant.

La chambre de combustion comprend au moins une bougie d'allumage qui est configurée pour amorcer la combustion d'un mélange d'air et de carburant dans la chambre de combustion.

En altitude, les basses pressions, les faibles températures et les variations de la viscosité du carburant, rendent plus difficile le rallumage en vol de la chambre de combustion.

De manière connue, la chambre de combustion comprend des injecteurs d'un premier type qui sont les plus proches des bougies d'allumage, et des injecteurs d'un deuxième type qui sont plus éloignés des bougies d'allumage.

Les injecteurs du premier type sont configurés pour injecter un débit de carburant supérieur à celui des injecteurs du deuxième type. Les injecteurs du premier type sont aussi configurés pour générer une nappe de mélange d'air et de carburant avec un angle d'ouverture supérieur à celui de la nappe de carburant générée par les injecteurs du deuxième type. L'allumage et/ou le rallumage en vol de la chambre de combustion sont facilités. Une telle chambre de combustion est par exemple connue de la demande de brevet FR 2 943 119.

Néanmoins, il existe un besoin pour faciliter davantage le rallumage en vol de la chambre de combustion, avec si possible une répartition plus homogène du carburant dans la chambre de combustion et en limitant les hétérogénéités de température dans la chambre de combustion.

Les documents US 5 402 634 A, US 4 817 389 A et US 5 167 122 A divulguent des chambres de combustion pour turbomachine comprenant au moins une bougie d'allumage et des injecteurs de carburant de deux types.

### EXPOSÉ DE L'INVENTION

L'invention vise à résoudre au moins partiellement les problèmes rencontrés dans les solutions de l'art antérieur.

A cet égard, l'invention a pour objet une chambre de combustion pour turbomachine. La chambre de combustion comprend au moins une bougie d'allumage, au moins un injecteur de carburant d'un premier type, et au moins un injecteur de carburant d'un deuxième type.

L'injecteur du premier type est situé en regard de la bougie d'allumage. L'injecteur du deuxième type est plus éloigné de la bougie que l'injecteur du premier type.

Chaque injecteur de carburant comprend une ouverture d'entrée de carburant, une première sortie de carburant, un organe mobile d'étanchéité, et un premier moyen élastique de rappel.

L'organe mobile d'étanchéité est configuré pour être mobile entre une position d'ouverture dans laquelle il laisse passer du carburant en direction de la première sortie et une position de fermeture dans laquelle il obture l'ouverture d'entrée. L'organe mobile d'étanchéité est configuré pour s'ouvrir lorsque la pression carburant dépasse un seuil d'ouverture de l'organe mobile d'étanchéité.

Le premier moyen élastique de rappel est configuré pour solliciter l'organe mobile d'étanchéité vers sa position de fermeture.

Selon l'invention, le seuil d'ouverture de l'organe mobile d'étanchéité de l'injecteur du premier type, dit premier seuil d'ouverture, est strictement inférieur au seuil d'ouverture de l'organe mobile d'étanchéité de l'injecteur du deuxième type, dit deuxième seuil d'ouverture.

Grâce à l'injecteur du premier type, le rallumage en vol de la chambre de combustion est facilité, notamment en altitude.

La différence de pression entre la pression du carburant arrivant dans l'injecteur du premier type et la pression du carburant sortant de cet injecteur tend à augmenter, ce qui tend à réduire la taille des gouttes du carburant injecté. Il en découle un meilleur mélange d'air et de carburant injecté dans la chambre de combustion. Le rallumage en vol de la chambre de combustion est alors facilité.

Le seuil d'ouverture de l'organe d'étanchéité de l'injecteur du premier type est abaissé par rapport au seuil d'ouverture de l'organe d'étanchéité de l'injecteur du deuxième type, au lieu d'abaisser le seuil d'ouverture de l'organe d'étanchéité de tous les injecteurs. Le nombre d'injecteurs du premier type étant très inférieur à celui des injecteurs du deuxième type, l'incidence de l'invention sur le système d'alimentation en carburant des injecteurs est limitée.

L'invention peut comporter de manière facultative une ou plusieurs des caractéristiques suivantes combinées entre elles ou non.

Selon une particularité de réalisation, l'injecteur du premier type et/ou de l'injecteur du deuxième type comprend une deuxième sortie de carburant, un organe mobile de dosage, et un deuxième moyen élastique de rappel configuré pour solliciter l'organe mobile de dosage vers sa position de fermeture.

L'organe mobile de dosage est configuré pour être mobile entre une position d'ouverture dans laquelle il laisse passer du carburant en direction de la deuxième sortie et une position de fermeture dans laquelle il empêche la circulation de carburant vers la deuxième sortie. L'organe mobile de dosage est configuré pour s'ouvrir lorsque la pression carburant dépasse un seuil d'ouverture de l'organe mobile de dosage qui est supérieur au seuil d'ouverture de l'organe mobile d'étanchéité de l'injecteur. La première sortie communique fluidiquement avec un circuit primaire de l'injecteur, la deuxième sortie communiquant fluidiquement avec un circuit secondaire de l'injecteur.

Selon une particularité de réalisation, l'organe mobile d'étanchéité de l'injecteur du premier type et/ou l'injecteur du deuxième type est configuré pour être ouvert lorsque la pression du carburant est supérieure au seuil d'ouverture de l'organe mobile d'étanchéité de l'injecteur, pour permettre au carburant d'alimenter le circuit primaire à travers la première sortie. L'organe mobile de dosage de l'injecteur est configuré pour être ouvert lorsque la pression du carburant est supérieure au seuil d'ouverture de l'organe mobile de dosage, pour permettre au carburant d'alimenter le circuit secondaire de l'injecteur à travers la deuxième sortie.

La différence de pression entre la pression du carburant arrivant dans l'injecteur du premier type et la pression du carburant sortant de cet injecteur lorsque l'organe mobile de dosage est en position d'ouverture tend à augmenter, ce qui tend à réduire la taille des gouttes du carburant injecté et à faciliter le rallumage en vol de la chambre de combustion.

Selon une particularité de réalisation, le premier moyen élastique de rappel de l'injecteur du premier type a une raideur inférieure à la raideur du premier moyen élastique de rappel de l'injecteur du deuxième type.

De préférence, le premier moyen élastique de rappel comprend un ressort. De préférence, le deuxième moyen élastique de rappel comprend un ressort.

De préférence, le premier moyen élastique de rappel et le deuxième moyen élastique de rappel sont agencés en parallèles, c'est-à-dire autour d'un même axe longitudinal de l'injecteur.

Selon une particularité de réalisation, l'injecteur du premier type et/ou l'injecteur du deuxième type comprend une enveloppe externe. L'organe mobile de dosage est au moins partiellement solidaire en déplacement de l'organe mobile d'étanchéité en formant avec l'organe mobile d'étanchéité un équipage mobile par rapport à l'enveloppe externe.

De préférence, l'organe mobile de dosage est fixé à l'organe mobile d'étanchéité. De préférence et en variante, l'organe mobile de dosage est monobloc avec l'organe mobile d'étanchéité.

Selon une particularité de réalisation, le seuil d'ouverture de l'organe de dosage de l'injecteur du premier type est identique au seuil d'ouverture de l'organe de dosage de l'injecteur du deuxième type.

Selon une particularité de réalisation, l'injecteur du premier type est configuré pour injecter en régime permanent un débit de carburant qui est sensiblement identique au débit de carburant injecté par l'injecteur du deuxième type.

La répartition du mélange air-carburant tend alors à être plus homogène dans la chambre de combustion, ce qui tend à limiter les hétérogénéités de température dans la chambre de combustion, tout en facilitant le rallumage en vol de la chambre de combustion.

Selon une particularité de réalisation, le rapport de la valeur du deuxième seuil d'ouverture sur la valeur du premier seuil d'ouverture est compris entre 1,03 et 1,10.

Selon une particularité de réalisation, l'injecteur du premier type est configuré pour injecter du carburant selon une nappe ayant un angle d'ouverture qui est sensiblement égal à un angle d'ouverture d'une nappe de carburant destinée à être injectée par l'injecteur du deuxième type.

La répartition du mélange air-carburant tend alors à être plus homogène dans la chambre de combustion, ce qui tend à limiter les hétérogénéités de température dans la chambre de combustion, tout en facilitant le rallumage en vol de la chambre de combustion.

Selon une particularité de réalisation, la chambre de combustion comprend un premier système d'injection dans lequel est engagé l'injecteur du premier type, et un deuxième système d'injection dans lequel est engagé l'injecteur du deuxième type. Chaque système d'injection comprend au moins une vrille d'air et un bol mélangeur. Le premier système d'injection est sensiblement identique au deuxième système d'injection.

L'invention concerne également une turbomachine comprenant une chambre de combustion telle que définie ci-dessus. De préférence, la turbomachine est une turbomachine d'aéronef.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle en demi coupe longitudinale d'une chambre de combustion de turbomachine, selon l'invention ;
- la figure 2 est une représentation schématique partielle en coupe longitudinale d'un injecteur de carburant de la chambre de combustion selon l'invention, l'organe mobile d'étanchéité étant en position de fermeture;
- la figure 3 est une représentation schématique partielle en coupe longitudinale d'un injecteur de carburant de la chambre de combustion selon l'invention, l'organe mobile d'étanchéité étant en position d'ouverture et l'organe mobile de dosage en position de fermeture ;
- la figure 4 est une représentation schématique partielle en coupe longitudinale d'un injecteur de carburant de la chambre de combustion selon l'invention, l'organe mobile d'étanchéité et l'organe mobile de dosage étant en position d'ouverture ;
- la figure 5 est une représentation schématique partielle des nappes d'injection de carburant dans la chambre de combustion selon l'invention.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

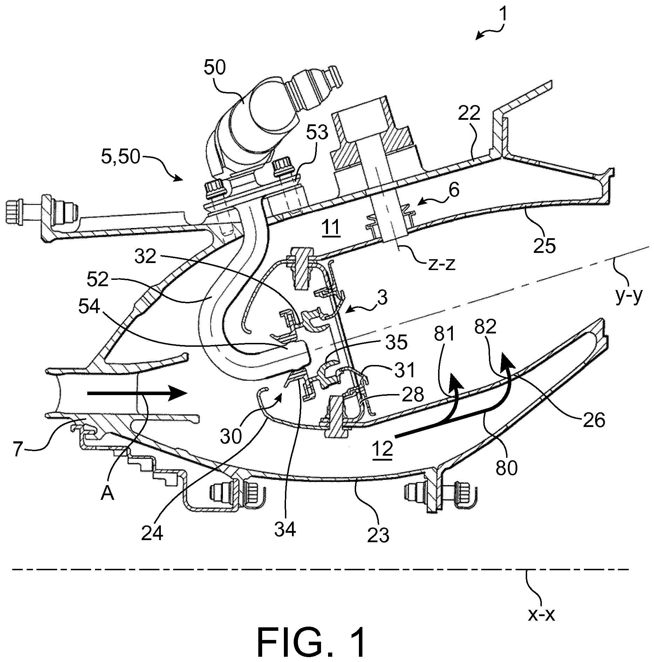

La figure 1 représente de manière schématique une chambre de combustion 2 d'une turbomachine d'aéronef. La chambre de combustion 2 est annulaire autour d'un axe longitudinal X-X de la turbomachine.

Elle comporte une paroi de carter extérieure 22 et une paroi de carter intérieure 23, un carénage 24, une paroi externe 25 et une paroi interne 26 qui sont réunies par un fond de chambre 28.

Elle comprend également au moins une bougie d'allumage 6, des injecteurs 5a d'un premier type d'injecteurs qui sont situé en regard des bougies d'allumage 6, des injecteurs 5b d'un deuxième type d'injecteurs qui sont plus éloignés des bougies 6, des systèmes d'injection 3 et un diffuseur 7.

La paroi de carter extérieure 22 délimite la chambre de combustion 2 radialement vers l'extérieur par rapport à l'axe longitudinal X-X de la turbomachine. La paroi de carter intérieure 23 délimite la chambre de combustion 2 radialement vers l'intérieur par rapport à l'axe longitudinal X-X de la turbomachine.

La paroi de carter extérieure 22 délimite avec la paroi externe 25 un premier passage 11 d'écoulement d'air. De même, la paroi de carter intérieure 23 définit avec la paroi interne de chambre 26 un deuxième passage 12 d'écoulement d'air.

Dans l'ensemble de l'exposé, une direction longitudinale est une direction qui est sensiblement parallèle à l'axe longitudinal X-X de la turbomachine. Une direction radiale est une direction qui est sensiblement orthogonale à l'axe longitudinal X-X de la turbomachine et qui est sécante avec cet axe. Une direction circonférentielle est une direction autour de l'axe longitudinal X-X de la turbomachine.

Une direction « amont » et la direction « aval » sont définies par la direction générale d'écoulement de l'air et du carburant dans la chambre de combustion 2. Cette direction correspond également sensiblement à la direction générale d'écoulement des gaz d'échappement dans la turbomachine.

La paroi externe 25 et la paroi interne 26 sont des parois de révolution qui sont coaxiales autour de l'axe longitudinal de turbomachine X-X, en étant symétriques par rapport à un axe longitudinal Y-Y du système d'injection 3 qui est représenté à la figure 1. Elles comprennent chacune des orifices primaires 81 d'introduction d'un flux d'air primaire et des orifices de dilution 82 d'introduction d'un flux d'air de dilution dans la chambre de combustion 2.

Le carénage 24 s'étend depuis la paroi externe 25 et la paroi interne 26 vers l'amont en étant situé en amont du fond de chambre 28. Il comporte des ouvertures centrales de logement des systèmes d'injection 3 et des injecteurs 5 correspondants.

Le fond de chambre 28 comporte des ouvertures de montage des systèmes d'injection 3 dans desquels sont engagés les injecteurs de carburant 5.

Chaque bougie d'allumage 6 est montée à travers la paroi externe 25 de la chambre de combustion. Elle s'étend transversalement à cette paroi en ayant son axe longitudinal Z-Z qui est sensiblement orthogonal à l'axe longitudinal Y-Y du système d'injection 3 de l'injecteur 5a du premier type qui est situé à proximité de cette bougie 6.

La bougie d'allumage 6 sert à enflammer la nappe de mélange d'air et de carburant produite par l'injecteur 5a du premier type, pour que la flamme se propage ensuite aux nappes de mélange d'air et de carburant voisines qui sont produites par les injecteurs 5b de carburant du deuxième type, pour allumer la chambre de combustion 2.

Les systèmes d'injection 3 sont montés sur le fond de chambre 28 en étant espacés les uns des autres selon une direction circonférentielle.

Chaque système d'injection 3 comprend d'amont en aval une traversée coulissante 34, une vrille 32, un venturi 35, et un bol mélangeur 31. La traversée coulissante 34, la vrille 32 et le bol mélangeur 31 forment conjointement des moyens d'alimentation en air 30 pour produire une nappe de mélange air-carburant avec le carburant injecté par l'injecteur 5 correspondant.

Dans le mode de réalisation représenté, les systèmes d'injection 3 des injecteurs 5a du premier type sont sensiblement identiques aux systèmes d'injection 3 des injecteurs 5b du deuxième type.

Chaque système d'injection 3 est raccordé à un des injecteurs 5 de carburant qui est monté dans la traversée coulissante 34 au niveau d'un nez d'injecteur. La traversée coulissante 34 peut comporter des trous d'alimentation en air.

La vrille 32 est montée solidaire du bol mélangeur 31. Elle comporte généralement un premier étage d'aubes et un deuxième étage d'aubes, qui ont pour fonction d'entraîner l'air en rotation autour de l'axe Y-Y du système d'injection 3. Les aubes du premier étage d'aubes de la vrille 32 peuvent tourner dans le même sens ou en sens contraire de celles du deuxième étage d'aubes de la vrille 32.

Le bol mélangeur 31 présente une forme évasée sensiblement de révolution autour de l'axe longitudinal Y-Y du système d'injection 3. Il comprend des trous traversants pour alimenter la chambre de combustion 2 en air. Il est fixé au fond de chambre 28.

Le diffuseur 7 est configuré pour alimenter la chambre de combustion 2, notamment les systèmes d'injection 3, les orifices primaires 81 et les orifices de dilution 82, en air chaud sous pression selon la flèche A.

Cet air sous pression sert notamment à la combustion ou au refroidissement de la chambre de combustion 2. Une partie de cet air est introduit dans la chambre de combustion 2 au niveau de l'ouverture centrale du carénage 24, tandis qu'une autre partie de l'air s'écoule vers les passages 11 et 12 d'écoulement d'air. L'air alimentant le système d'injection 3 s'écoule depuis l'ouverture centrale du carénage 24, à travers notamment les aubes des vrilles 32 du système d'injection représenté à la figure 1 et des trous traversants du bol mélangeur 31. L'écoulement d'air schématisé par les flèches 80 dans les passages 11 et 12 pénètre dans la chambre de combustion 2 par les orifices primaires 81 et les orifices de dilution 82.

En référence conjointe aux figures 1 à 5, chaque injecteur 5 est de type aéromécanique, c'est-à-dire que la pression du carburant à l'intérieur de l'injecteur 5 est utilisé pour pulvériser le carburant en sortie de l'injecteur 5. Il comporte un circuit primaire de carburant destiné par exemple à une phase d'allumage et de faible puissance, et un circuit secondaire intervenant dans les phases de fonctionnement ultérieures, de moyenne à forte puissance, en complément du circuit primaire.

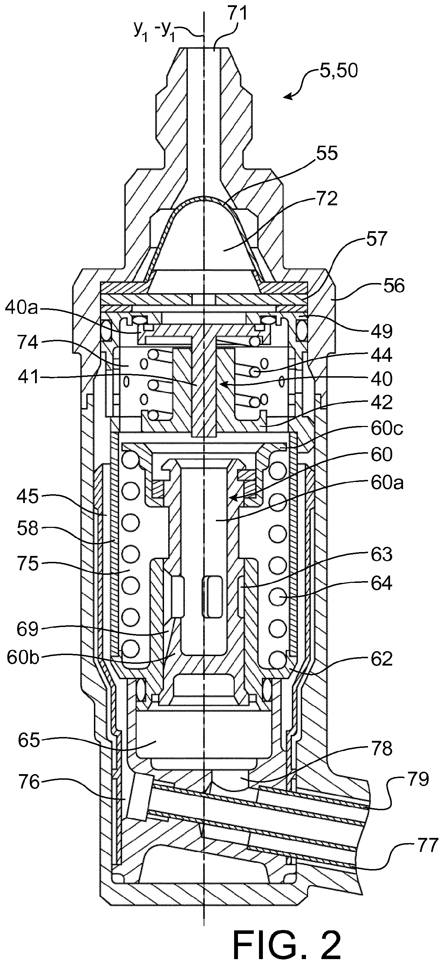

Chaque injecteur 5 comprend d'amont en aval un corps 50 dont l'intérieur est représenté plus en détail aux figures 2 à 4, une platine de fixation 53, une canne d'injection 52 et un nez d'injecteur 54.

La platine de fixation 53 sert à fixer l'injecteur sur la paroi de carter extérieure 22. Le nez d'injecteur 54 comprend une buse de pulvérisation du carburant à son extrémité opposée à la canne d'injection 52. Il est destiné à engager la traversée coulissante 34. La canne d'injection 52 relie fluidiquement le corps 50 de l'injecteur au nez d'injecteur 54.

En référence plus spécifiquement aux figures 2 à 4, le corps 50 d'injecteur comporte un enveloppe externe 56 creuse qui délimite l'injecteur radialement vers l'extérieur. Le corps 50 de l'injecteur est de révolution autour d'un axe longitudinal Y₁-Y₁ du corps 50 d'injecteur.

L'intérieur du corps 50 comprend une ouverture d'entrée de carburant 71, une crépine 55, un diaphragme 57, un organe mobile d'étanchéité 40, un organe mobile de dosage 60, un premier moyen élastique 44 de rappel, un deuxième moyen élastique 64 de rappel, une première sortie 76 de carburant, et une deuxième sortie 78 de carburant.

L'intérieur du corps 50 d'injecteur comprend une partie fixe qui comprend l'enveloppe externe 56, la crépine 55, le diaphragme 57, un corps intermédiaire 58 qui est situé à l'intérieur de l'enveloppe externe 56 en s'étendant comme l'enveloppe externe 56 autour de l'axe longitudinal Y₁-Y₁ du corps d'injecteur, un siège 49 de l'organe d'étanchéité, un support 42 de l'organe mobile d'étanchéité, un support 62 de l'organe mobile de dosage, un conduit 77 d'alimentation du circuit primaire, et un conduit 79 d'alimentation du circuit secondaire.

L'organe mobile d'étanchéité 40, le premier moyen élastique de rappel 44, l'organe mobile de dosage 60 et le deuxième moyen élastique de rappel 64 sont mobiles relativement à l'enveloppe externe 56, sous l'effet de la pression du carburant dans le corps 50.

Le corps 50 d'injecteur comprend un orifice d'entrée 71 qui forme l'ouverture d'entrée de l'injecteur, une chambre d'entrée 72, une chambre d'admission 74, un espace primaire 45 qui est situé radialement entre le corps intermédiaire 58 et l'enveloppe externe 56 relativement à l'axe longitudinal Y₁-Y₁ du corps d'injecteur, une chambre intermédiaire 75 qui est située radialement relativement à l'axe longitudinal Yi-Yi entre le support 62 de l'organe mobile de dosage et le corps intermédiaire 58, un évidement central 60a de l'organe de dosage, au moins une fente 69 de dosage, et une chambre aval 65.

L'orifice d'entrée 71 est une ouverture d'entrée de carburant dans l'injecteur 5. Il est destiné à recevoir le carburant sous pression provenant d'une pompe à carburant non représentée, ce carburant débouche ensuite dans la chambre d'entrée 72 après avoir traversé la crépine 55 de filtrage. Le diaphragme 57 est placé axialement entre la chambre d'entrée 72 et l'organe mobile d'étanchéité 40.

La chambre d'admission 74 est située en aval de la chambre d'entrée 72 et elle est destinée à être séparée de cette dernière par l'organe mobile d'étanchéité 40. La chambre d'admission 74 communique fluidiquement avec l'espace primaire 45 qui débouche dans la première sortie 76 ou sortie primaire. La chambre d'admission 74 communique également fluidiquement avec la chambre intermédiaire 75 et avec l'évidement central 60a de l'organe de dosage.

L'espace primaire 45 communique fluidiquement avec la première sortie 76 pour alimenter le circuit primaire de l'injecteur 5.

L'organe mobile d'étanchéité 40 comporte une tête 40a et une tige 41. Il s'agit d'une soupape qui est également connue sous le nom de soupape d'arrêt.

L'organe mobile d'étanchéité 40 est configuré pour être mobile entre une position d'ouverture dans laquelle il laisse passer du carburant en direction de la première sortie 76 et une position de fermeture dans laquelle il obture l'ouverture d'entrée 71.

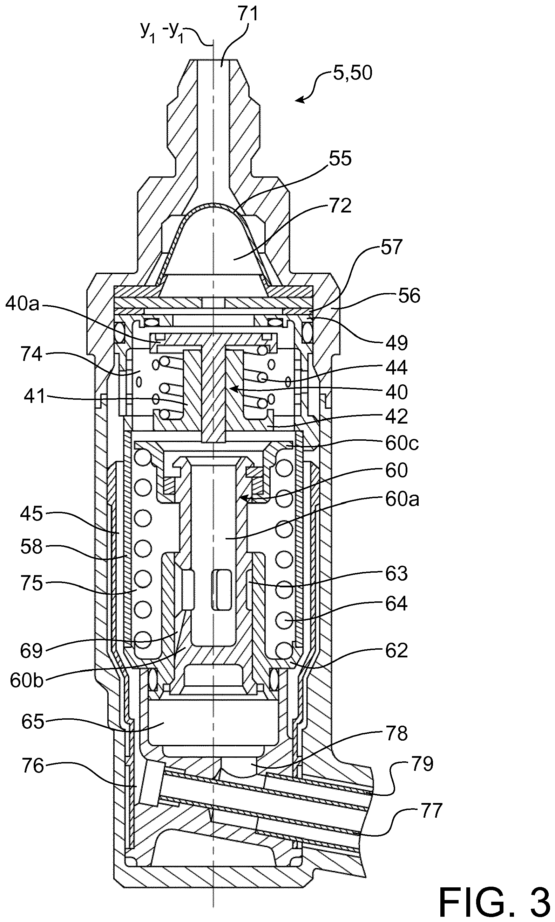

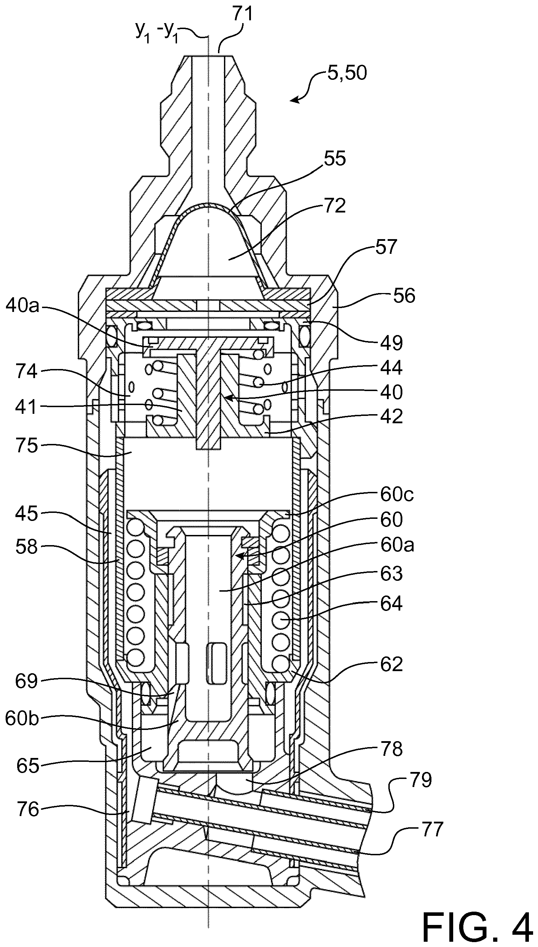

En position de fermeture qui est représentée à la figure 2, la tête 40a de l'organe mobile d'étanchéité est en appui contre son siège 49. En position d'ouverture qui est représentée à la figure 3 et à la figure 4, la tête 40a de l'organe mobile d'étanchéité est abaissée relativement à son siège 49 pour laisser passer le carburant en direction de la chambre d'admission 74.

L'organe mobile d'étanchéité 40 est configuré pour s'ouvrir lorsque la pression carburant dépasse un seuil déterminé d'ouverture S₁, S₂ de l'organe mobile d'étanchéité 40. L'organe mobile d'étanchéité 40 de l'injecteur est configuré pour être ouvert lorsque la pression du carburant est supérieure au seuil d'ouverture S₁, S₂ de l'organe mobile d'étanchéité 40 de l'injecteur.

Le seuil d'ouverture S₁ de l'organe mobile d'étanchéité 40 de l'injecteur 5a du premier type, dit premier seuil d'ouverture S₁, est strictement inférieur au seuil d'ouverture S₂ de l'organe mobile d'étanchéité 40 de l'injecteur 5b du deuxième type, dit deuxième seuil d'ouverture S₂.

Le rapport de la valeur du deuxième seuil d'ouverture S₂ sur la valeur du premier seuil d'ouverture S₁ est compris entre 1,03 et 1,10.

Le support de l'organe d'étanchéité 42 comprend une partie tubulaire dans laquelle est montée coulissante la tige 41 de l'organe mobile d'étanchéité 40. Le support de l'organe d'étanchéité 42 repose sur le corps intermédiaire 58 qui s'étend vers le bas et qui repose sur le support 62 de l'organe mobile de dosage.

Le premier moyen élastique de rappel 44 comprend un ressort configuré pour être sollicité en compression. Ce ressort de compression est hélicoïdal. Le premier moyen élastique de rappel 44 prend appui sur la tête 40a de l'organe d'étanchéité et sur le support 42 de l'organe d'étanchéité. Le premier moyen élastique de rappel 44 est configuré pour solliciter l'organe mobile d'étanchéité 40 vers sa position de fermeture.

Le premier moyen élastique de rappel 44 de l'injecteur 5a du premier type a notamment une raideur inférieure à la raideur du premier moyen élastique de rappel 44 de l'injecteur 5b du deuxième type.

La chambre intermédiaire 75 est située en aval de la chambre d'admission 74. La chambre intermédiaire 75 est destinée à être séparée de la chambre aval 65 par l'organe mobile de dosage 60. La chambre intermédiaire 75 communique fluidiquement avec l'évidement central 60a de l'organe de dosage et avec les fentes 69 de dosage.

La chambre aval 65 est située en aval l'organe de dosage mobile 60 et elle débouche dans la deuxième sortie 78 ou sortie secondaire qui alimente en carburant le circuit secondaire.

L'organe mobile de dosage 60 comporte en outre une tête 60c et une portion tubulaire qui comprend l'évidement central 60a, des ouvertures radiales et un flanc inférieur 60b.

La tête 60c de l'organe mobile de dosage 60 repose sur le deuxième moyen élastique de rappel 62.

Les ouvertures radiales débouchent dans des fentes 69 de dosage. Ces fentes de dosage 69 sont délimitées radialement par rapport à l'axe longitudinal Y₁-Y₁ par la surface externe du flanc inférieur 60b et par la surface intérieure du support 62 de l'organe mobile de dosage. La géométrie des fentes 69 est telle que les sections de passage des fentes 69 varient en fonction de la position de l'organe mobile de dosage 60. En particulier, plus la pression du carburant dans la l'évidement central 60a est élevée, plus les sections de passage des fentes 69 sont grandes.

L'organe mobile de dosage 60 est configuré pour être mobile entre une position d'ouverture dans laquelle il laisse passer du carburant en direction de la chambre aval 65 et une position de fermeture dans laquelle il obture la chambre aval 65.

En position de fermeture qui est représentée à la figure 3, le deuxième moyen élastique de rappel 64 maintient le flanc inférieur 60b en appui contre une surface inférieure du support 62 de l'organe de dosage. Les fentes 69 de dosage ne débouchent pas dans la chambre aval 65.

En position d'ouverture qui est représentée à la figure 4, la tête 60c de l'organe mobile de dosage est en butée contre une surface supérieure du support 62 de l'organe mobile de dosage. Le flanc inférieur 60b de l'organe mobile de dosage est ainsi disposé de telle manière que les fentes 69 de dosage débouchent dans la chambre aval 65.

L'organe mobile de dosage 60 est configuré pour s'ouvrir lorsque la pression carburant dépasse un seuil déterminé d'ouverture S₃ de l'organe mobile de dosage 60. Le seuil d'ouverture S₃ de l'organe mobile de dosage 60 est strictement supérieur au seuil d'ouverture S₁, S₂ de l'organe mobile d'étanchéité 40 de l'injecteur correspondant. Plus généralement, le seuil d'ouverture S₃ de l'organe mobile de dosage 60 est notamment strictement supérieur au seuil d'ouverture S₁, S₂ de chaque organe mobile d'étanchéité 40 des injecteurs de la chambre de combustion 2. L'organe mobile de dosage 60 est configuré pour être ouvert lorsque la pression du carburant est supérieure au seuil d'ouverture S₃ de l'organe mobile de dosage 60.

Le seuil d'ouverture S₃ de l'organe mobile de dosage de l'injecteur 5a du premier type est sensiblement identique au seuil d'ouverture S₃ de l'organe mobile de dosage 60 de l'injecteur 5b du deuxième type.

Le support 62 de l'organe de dosage comprend une partie tubulaire dans un trou central 63 de laquelle est montée coulissante le flanc inférieur 60b de l'organe mobile de dosage 60. Le support de l'organe mobile de dosage 62 repose sur une embase qui délimite au moins partiellement la chambre aval 65.

Le deuxième moyen élastique de rappel 64 comprend un ressort configuré pour être sollicité en compression. Ce ressort de compression est hélicoïdal. Ce ressort 64 est en contact de la tête 60c de l'organe de dosage et il s'appuie sur une surface radiale du support de l'organe mobile de dosage 62. Il est agencé autour du même axe longitudinal Y₁-Y₁ du corps d'injecteur que le premier moyen élastique de rappel 44. Le deuxième moyen élastique de rappel 64 est configuré pour solliciter l'organe mobile de dosage 60 vers sa position de fermeture.

Le deuxième moyen élastique de rappel 64 de l'injecteur 5a du premier type a notamment une raideur sensiblement identique à la raideur du deuxième moyen élastique de rappel 64 de l'injecteur 5b du deuxième type.

La deuxième sortie 78 débouche dans un conduit externe 79 qui est un conduit d'alimentation en carburant du circuit secondaire de l'injecteur 5.

La première sortie 76 débouche dans un conduit interne 77 qui est un conduit d'alimentation en carburant du circuit primaire de l'injecteur 5. Ce conduit interne 77 est situé à l'intérieur du conduit d'alimentation 79 du circuit secondaire. L'espace annulaire qui est ménagé entre les deux conduits 77, 79 est destiné à être alimenté par du carburant qui alimente le circuit secondaire.

En fonctionnement, plusieurs cas peuvent se présenter. Dans un premier cas, la pression du carburant dans la chambre d'entrée 72 est inférieure au seuil d'ouverture S₁, S₂ de l'organe mobile d'étanchéité 40. L'organe mobile d'étanchéité 40 est alors maintenu en position fermée par le ressort de rappel 44 et le carburant ne s'écoule ni à travers la première sortie 76, ni à travers la deuxième sortie 78.

Dans un deuxième cas, correspondant à une phase d'allumage ou de fonctionnement à bas régime, la pression du carburant dans la chambre d'entrée 72 est supérieure au seuil d'ouverture S₁, S₂ de l'organe mobile d'étanchéité 40, mais la pression du carburant dans la chambre intermédiaire 75 est inférieure au seuil d'ouverture S₃ de l'organe mobile de dosage 60. L'organe mobile d'étanchéité 40 est alors ouvert et le carburant peut s'écouler dans l'espace primaire 45 puis à travers la première sortie 76. L'organe mobile de dosage 60 reste toutefois fermé, et le carburant ne s'écoule pas à travers la deuxième sortie 78.

Dans un troisième cas, correspondant à une phase de fonctionnement à moyen ou à plein régime, la pression du carburant dans la chambre d'entrée 72 est supérieure au seuil d'ouverture S₁, S₂ de l'organe mobile d'étanchéité 40 et la pression du carburant dans la chambre intermédiaire 75 est supérieure seuil d'ouverture S₃ de l'organe mobile de dosage 60. L'organe mobile d'étanchéité 40 est ouvert et le carburant peut s'écouler dans l'espace primaire 45 puis à travers la première sortie 76. En outre, l'organe mobile de dosage 60 est également ouvert et le fluide peut s'écouler au travers de la chambre intermédiaire 75, de l'évidement central 60a, des fentes 69, de la chambre aval 65 puis de la deuxième sortie 78.

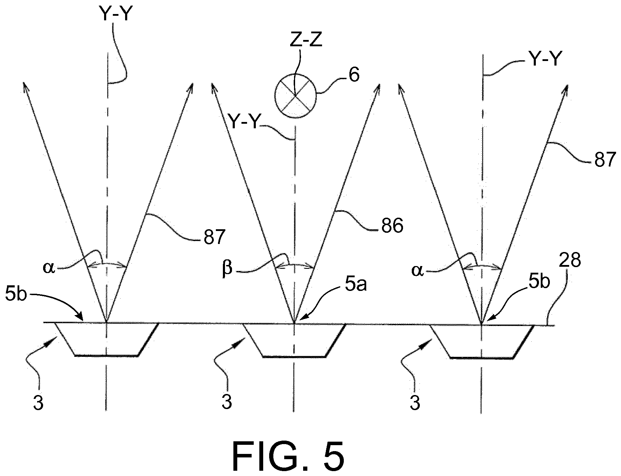

En référence à la figure 5, le débit de carburant injecté par chaque injecteur 5a du premier type est sensiblement identique au débit de carburant injecté par chaque injecteur 5b du deuxième type, au moins en régime permanent.

Le débit d'air d'alimentation des systèmes d'injection 3 des injecteurs 5a du premier type est sensiblement identique à celui des systèmes d'injection 3 des injecteurs 5b du deuxième type.

Chaque injecteur 5a du premier type est configuré pour injecter du carburant qui forme une nappe 86 de mélange d'air et de carburant de mélange d'air et de carburant conique en s'ouvrant vers l'aval. Cette nappe 86 présentant un angle d'ouverture β centré sur l'axe longitudinal Y-Y du système d'injection correspondant et en direction des injecteurs 5 adjacents.

Chaque injecteur 5b du deuxième type est configuré pour injecter du carburant qui forme une nappe 87 de mélange d'air et de carburant conique en s'ouvrant vers l'aval. Cette nappe 87 présentant un angle d'ouverture α centré sur l'axe longitudinal Y-Y du système d'injection correspondant et en direction des injecteurs 5 adjacents.

L'angle d'ouverture β des nappes 86 de mélange air-carburant en provenance des injecteurs 5a du premier type est sensiblement égal à l'angle d'ouverture α des nappes 87 de mélange air-carburant en provenance des injecteurs 5b du deuxième type.

Il découle de l'égalité des débits entre les différents injecteurs 5a, 5b et de l'égalité des angles d'ouvertures a, β des nappes une répartition plus homogène du carburant dans la chambre de combustion 2 et une réduction des hétérogénéités de température dans la chambre de combustion 2.

De manière générale, le seuil d'ouverture Si inférieur de l'organe mobile d'étanchéité 40 de chaque injecteur 5a du premier type par rapport au seuil d'ouverture S₂ de l'organe mobile d'étanchéité 40 de chaque injecteur 5b du deuxième type tend à limiter les pertes de charges du carburant dans les injecteurs 5a du premier type.

La différence de pression entre la pression du carburant arrivant dans l'ouverture d'entrée 71 d'un injecteur 5a du premier type et la pression du carburant traversant la deuxième sortie 78 de cet injecteur tend à être supérieure. La taille des gouttes de carburant injecté à proximité des bougies d'allumage 6 tend à réduire. Il en découle un meilleur mélange d'air et de carburant injecté dans la chambre de combustion 2. Le rallumage en vol de la chambre de combustion 2 est alors facilité.

Le seuil d'ouverture S₂ de l'organe d'étanchéité de chaque injecteur 5b du deuxième type est laissé inchangé. Or, le nombre d'injecteurs 5b du deuxième type est très supérieur à celui des injecteurs 5a du premier type, du fait du faible nombre de bougies 6 d'allumage dans les turbomachines 1 modernes. L'abaissement du seuil d'ouverture S₁ de l'organe mobile d'étanchéité 40 de chaque injecteur 5a du premier type a donc relativement peu d'influence sur le système d'alimentation en carburant des injecteurs 5. Par conséquent, la chambre de combustion 2 tend à être rallumée plus facilement avec des modifications assez limitées de la turbomachine et en particulier de son système d'alimentation en carburant.

Bien entendu, diverses modifications peuvent être apportées par l'homme du métier à l'invention qui vient d'être décrite sans sortir du cadre de l'exposé de l'invention.

En variante, le débit de carburant injecté par chaque injecteur 5a du premier type est strictement supérieur au débit de carburant injecté par chaque injecteur 5b du deuxième type, pour faciliter encore le rallumage en vol de la chambre de combustion 2.

Dans ce cas, le seuil d'ouverture S₃ de l'organe mobile de dosage 60 de chaque injecteur 5a du premier type est notamment strictement inférieur à celui de l'organe mobile de dosage 60 de chaque injecteur 5b du deuxième type. En plus ou en variante, le nez d'injecteur 54 de chaque injecteur 5a du premier type présente un orifice de sortie de plus grand diamètre que celui de chaque injecteur 5b du deuxième type.

## Revendications

1. Chambre de combustion (2) pour turbomachine, comprenant :
au moins une bougie d'allumage (6),
au moins un injecteur (5) de carburant d'un premier type (5a), situé en regard de la bougie d'allumage (6),
au moins un injecteur (5) de carburant d'un deuxième type (5b), plus éloigné de la bougie d'allumage (6) que l'injecteur du premier type (5a),
chaque injecteur (5) de carburant comprenant :
une ouverture d'entrée (71) de carburant,
une première sortie (76) de carburant,
un organe mobile d'étanchéité (40) configuré pour être mobile entre une position d'ouverture dans laquelle il laisse passer du carburant en direction de la première sortie (76) et une position de fermeture dans laquelle il obture l'ouverture d'entrée (71), l'organe mobile d'étanchéité (40) étant configuré pour s'ouvrir lorsque la pression carburant appliquée à l'organe mobile d'étanchéité dépasse un seuil d'ouverture (S₁) de l'organe mobile d'étanchéité (40), et
un premier moyen élastique de rappel (44) configuré pour solliciter l'organe mobile d'étanchéité (40) vers sa position de fermeture, et
**caractérisé en ce que** le seuil d'ouverture (S₁) de l'organe mobile d'étanchéité (40) de l'injecteur (5a) du premier type, dit premier seuil d'ouverture (S₁), est strictement inférieur au seuil d'ouverture (S₂) de l'organe mobile d'étanchéité (40) de l'injecteur (5b) du deuxième type, dit deuxième seuil d'ouverture (S₂).

2. Chambre de combustion (2) pour turbomachine selon la revendication précédente, dans laquelle l'injecteur (5a) du premier type et/ou l'injecteur (5b) du deuxième type comprend :
une deuxième sortie (78) de carburant, et
un organe mobile de dosage (60) configuré pour être mobile entre une position d'ouverture dans laquelle il laisse passer du carburant en direction de la deuxième sortie (78) et une position de fermeture dans laquelle il empêche la circulation de carburant vers la deuxième sortie (78),
un deuxième moyen élastique de rappel (64) configuré pour solliciter l'organe mobile de dosage (60) vers sa position de fermeture,
l'organe mobile de dosage (60) étant configuré pour s'ouvrir lorsque la pression carburant dépasse un seuil d'ouverture (S₃) de l'organe mobile de dosage (60) qui est supérieur au seuil d'ouverture (S₁, S₂) de l'organe mobile d'étanchéité (40) de l'injecteur,
la première sortie (76) communiquant fluidiquement avec un circuit primaire de l'injecteur, la deuxième sortie (78) communiquant fluidiquement avec un circuit secondaire de l'injecteur.

3. Chambre de combustion (2) pour turbomachine selon la revendication précédente, dans laquelle l'organe mobile d'étanchéité (40) de l'injecteur du premier type et/ou de l'injecteur du deuxième type est configuré pour être ouvert lorsque la pression du carburant est supérieure au seuil d'ouverture (S₁, S₂) de l'organe mobile d'étanchéité (40) de l'injecteur, pour permettre au carburant d'alimenter le circuit primaire à travers la première sortie (76),
l'organe mobile de dosage (60) de l'injecteur est configuré pour être ouvert lorsque la pression du carburant est supérieure au seuil d'ouverture (S₃) de l'organe mobile de dosage (60), pour permettre au carburant d'alimenter le circuit secondaire de l'injecteur à travers la deuxième sortie (78).

4. Chambre de combustion (2) pour turbomachine selon l'une quelconque des revendications 2 et 3, dans laquelle le premier moyen élastique de rappel (44) de l'injecteur (5a) du premier type a une raideur inférieure à la raideur du premier moyen élastique de rappel (44) de l'injecteur (5b) du deuxième type,
le premier moyen élastique de rappel (44) comprenant de préférence un ressort, et/ou le deuxième moyen élastique de rappel (64) comprenant de préférence un ressort,
le premier moyen élastique de rappel (44) et le deuxième moyen élastique de rappel (64) étant de préférence agencés autour d'un même axe longitudinal (Y1-Y1) de l'injecteur.

5. Chambre de combustion (2) pour turbomachine selon l'une quelconque des revendications 2 à 4, dans laquelle le seuil d'ouverture (S₃) de l'organe de dosage de l'injecteur (5a) du premier type est identique au seuil d'ouverture (S₃) de l'organe de dosage de l'injecteur (5b) du deuxième type, et/ou
dans lequel l'injecteur (5a) du premier type est configuré pour injecter en régime permanent un débit de carburant qui est sensiblement identique au débit de carburant injecté par l'injecteur (5b) du deuxième type.

6. Chambre de combustion (2) pour turbomachine selon l'une quelconque des revendications précédentes, dans laquelle le rapport de la valeur du deuxième seuil d'ouverture (S₂) sur la valeur du premier seuil d'ouverture (S₁) est compris entre 1,03 et 1,10.

7. Chambre de combustion (2) pour turbomachine selon l'une quelconque des revendications précédentes, dans laquelle l'injecteur (5a) du premier type est configuré pour injecter du carburant selon une nappe (86) ayant un angle d'ouverture (β) qui est sensiblement égal à un angle d'ouverture (α) d'une nappe (87) de carburant destinée à être injectée par l'injecteur (5b) du deuxième type.

8. Chambre de combustion (2) pour turbomachine selon l'une quelconque des revendications précédentes, comprenant un premier système d'injection (3) dans lequel est engagé l'injecteur du premier type (5a), et un deuxième système d'injection (3) dans lequel est engagé l'injecteur (5b) du deuxième type, chaque système d'injection (3) comprenant au moins une vrille (32) d'air et un bol mélangeur (31),
le premier système d'injection (3) étant sensiblement identique au deuxième système d'injection (3).

9. Turbomachine comprenant une chambre de combustion (2) selon l'une quelconque des revendications précédentes, la turbomachine étant de préférence une turbomachine d'aéronef.

## Patentansprüche

1. Brennkammer (2) für eine Turbomaschine, die Folgendes umfasst:
mindestens eine Zündkerze (6),
mindestens einen Brennstoffinjektor (5) eines ersten Typs (5a), der gegenüber der Zündkerze (6) angeordnet ist,
mindestens einen Brennstoffinjektor (5) eines zweiten Typs (5b), der weiter von der Zündkerze (6) entfernt ist als der Injektor des ersten Typs (5a), wobei beide Brennstoffinjektoren (5) Folgendes umfassen:
eine Brennstoffeinlassöffnung (71),
einen ersten Brennstoffauslass (76),
ein bewegliches Dichtungsorgan (40), das so konfiguriert ist, dass es sich zwischen einer Öffnungsstellung, in der es Brennstoff in Richtung des ersten Auslasses (76) durchlässt, und einer Schließstellung, in der es die Einlassöffnung (71) verschließt, hin und her bewegen kann, wobei das bewegliche Dichtungsorgan (40) so konfiguriert ist, dass es sich öffnet, wenn der auf das bewegliche Dichtungsorgan einwirkende Brennstoffdruck eine Öffnungsschwelle (S₁) des beweglichen Dichtungsorgans (40) überschreitet, und
ein erstes elastisches Rückstellelement (44), das so konfiguriert ist, dass es das bewegliche Dichtungsorgan (40) in seine Schließstellung zurückzwingt, und
**dadurch gekennzeichnet, dass** die Öffnungsschwelle (S₁) des beweglichen Dichtungsorgans (40) des Injektors (5a) des ersten Typs, welche als erste Öffnungsschwelle (S₁) bezeichnet wird, stets niedriger ist als die Öffnungsschwelle (S₂) des beweglichen Dichtungsorgans (40) des Injektors (5b) des zweiten Typs, welche als zweite Öffnungsschwelle (S₂) bezeichnet wird.

2. Brennkammer (2) für eine Turbomaschine gemäß dem vorstehenden Anspruch, bei der der Injektor (5a) des ersten Typs und/oder der Injektor (5b) des zweiten Typs Folgendes umfasst:
einen zweiten Brennstoffauslass (78) und
ein bewegliches Dosierorgan (60), das so konfiguriert ist, dass es sich zwischen einer Öffnungsstellung, in der es Brennstoff in Richtung des zweiten Auslasses (78) durchlässt, und einer Schließstellung, in der es das Strömen von Brennstoff in Richtung des zweiten Auslasses (78) unterbindet, hin und her bewegen kann,
ein zweites elastisches Rückstellelement (64), das so konfiguriert ist, dass es das bewegliche Dosierorgan (60) in seine Schließstellung zurückzwingt,
wobei das bewegliche Dosierorgan (60) so konfiguriert ist, dass es sich öffnet, wenn der Brennstoffdruck eine Öffnungsschwelle (S₃) des beweglichen Dosierorgans (60) überschreitet, die größer ist als die Öffnungsschwelle (S₁, S₂) des beweglichen Dichtungsorgans (40) des Injektors,
wobei der erste Auslass (76) strömungsmechanisch mit einem Primärkreislauf des Injektors verbunden ist und der zweite Auslass (78) strömungsmechanisch mit einem Sekundärkreislauf des Injektors verbunden ist.

3. Brennkammer (2) für eine Turbomaschine gemäß dem vorstehenden Anspruch, bei dem das bewegliche Dichtungsorgan (40) des Injektors des ersten Typs und/oder des Injektors des zweiten Typs so konfiguriert ist, dass es sich in geöffneter Stellung befindet, wenn der Brennstoffdruck oberhalb der Öffnungsschwelle (S₁, S₂) des beweglichen Dichtungsorgans (40) des Injektors liegt, sodass der Brennstoff durch den ersten Auslass (76) in den Primärkreislauf strömen kann,
und bei dem das bewegliche Dosierorgan (60) des Injektors so konfiguriert ist, dass es sich in geöffneter Stellung befindet, wenn der Brennstoffdruck oberhalb der Öffnungsschwelle (S₃) des beweglichen Dosierorgans (60) liegt, sodass der Brennstoff durch den zweiten Auslass (78) in den Sekundärkreislauf des Injektors strömen kann.

4. Brennkammer (2) für eine Turbomaschine gemäß Anspruch 2 oder 3, bei der das erste elastische Rückstellelement (44) des Injektors (5a) des ersten Typs eine geringere Steifigkeit aufweist als das erste elastische Rückstellelement (44) des Injektors (5b) des zweiten Typs,
wobei das erste elastische Rückstellelement (44) vorzugsweise eine Feder umfasst und/oder das zweite elastische Rückstellelement (64) vorzugsweise eine Feder umfasst,
wobei das erste elastische Rückstellelement (44) und das zweite elastische Rückstellelement (64) vorzugsweise an der gleichen Längsachse (Y1-Y1) des Injektors angeordnet sind.

5. Brennkammer (2) für eine Turbomaschine gemäß einem der Ansprüche 2 bis 4, bei der die Öffnungsschwelle (S₃) des Dosierorgans des Injektors (5a) des ersten Typs identisch zu der Öffnungsschwelle (S₃) des Dosierorgans des Injektors (5b) des zweiten Typs ist und/oder
bei der der Injektor (5a) des ersten Typs so konfiguriert ist, dass er im stationären Zustand eine Brennstoffmenge einspritzt, die im Wesentlichen identisch zu der von dem Injektor (5b) des zweiten Typs eingespritzten Brennstoffmenge ist.

6. Brennkammer (2) für eine Turbomaschine gemäß einem der vorstehenden Ansprüche, bei der das Verhältnis des Werts der zweiten Öffnungsschwelle (S₂) zu dem Wert der ersten Öffnungsschwelle (S₁) zwischen 1,03 und 1,10 liegt.

7. Brennkammer (2) für eine Turbomaschine gemäß einem der vorstehenden Ansprüche, bei der der Injektor (5a) des ersten Typs so konfiguriert ist, dass er einen Brennstofffilm (86) einspritzt, dessen Öffnungswinkel (β) im Wesentlichen identisch zu einem Öffnungswinkel (α) eines Brennstofffilms (87) ist, dessen Einspritzung durch den Injektor (5b) des zweiten Typs vorgesehen ist.

8. Brennkammer (2) für eine Turbomaschine gemäß einem der vorstehenden Ansprüche, die eine erste Einspritzanlage (3), in die der Injektor des ersten Typs (5a) eingesetzt ist, und eine zweite Einspritzanlage (3), in die der Injektor (5b) des zweiten Typs eingesetzt ist, umfasst, wobei beide Einspritzanlagen (3) mindestens einen Luftverwirbler (32) und eine Mischkammer (31) umfassen,
wobei die erste Einspritzanlage (3) im Wesentlichen identisch zu der zweiten Einspritzanlage (3) ist.

9. Turbomaschine mit einer Brennkammer (2) gemäß einem der vorstehenden Ansprüche, wobei es sich bei der Turbomaschine vorzugsweise um eine Turbomaschine eines Luftfahrzeugs handelt.

## Claims

1. A combustion chamber (2) for a turbomachine, comprising:
at least one spark plug (6),
at least one fuel injector (5) of a first type (5a), located facing the spark plug (6),
at least one fuel injector (5) of a second type (5b), farther away from the spark plug (6) than the injector of the first type (5a),
each fuel injector (5) comprising:
an opening (71) for intake of fuel,
a first fuel outlet (76),
a mobile sealing member (40) configured to be mobile between an open position in which it lets fuel pass through in the direction of the first outlet (76) and a closed position in which it plugs the intake opening (71), wherein the mobile sealing member (40) is configured to open when the fuel pressure applied to the mobile sealing member exceeds an opening threshold (S₁) of the mobile sealing member (40), and
a first elastic return means (44) configured to stress the mobile sealing member (40) towards its closed position, and
**characterised in that** the opening threshold (S₁) of the mobile sealing member (40) of the injector (5a) of the first type, called first opening threshold (S₁), is strictly less than the opening threshold (S₂) of the mobile sealing member (40) of the injector (5b) of the second type, called second opening threshold (S₂).

2. The combustion chamber (2) according to the preceding claim, wherein the injector (5a) of the first type and/or the injector (5b) of the second type comprises:
a second fuel outlet (78), and
a mobile dosing member (60) configured to be mobile between an open position in which it lets fuel pass through in the direction of the second outlet (78) and a closed position in which it prevents the circulation of fuel towards the second outlet (78),
a second elastic return means (64) configured to stress the mobile dosing member (60) towards its closed position,
wherein the mobile dosing member (60) is configured to open when the fuel pressure exceeds an opening threshold (S₃) of the mobile dosing member (60) that is greater than the opening threshold (S₁, S₂) of the mobile sealing member (40) of the injector,
wherein the first outlet (76) fluidly communicates with a primary circuit of the injector, wherein the second outlet (78) fluidly communicates with a secondary circuit of the injector.

3. The combustion chamber (2) according to the preceding claim, wherein the mobile sealing member (40) of the injector of the first type and/or of the injector of the second type is configured to be open when the pressure of the fuel is greater than the opening threshold (S₁) of the mobile sealing member (40) of the injector, in order to allow the fuel to supply the primary circuit through the first outlet (76),
wherein the mobile dosing member (60) of the injector is configured to be open when the pressure of the fuel is greater than the opening threshold (S₃) of the mobile dosing member (60), in order to allow the fuel to supply the secondary circuit of the injector through the second outlet (78).

4. The combustion chamber (2) according to any one of claims 2 and 3, wherein the first elastic return means (44) of the injector (5a) of the first type has a stiffness lower than the stiffness of the first elastic return means (44) of the injector (5b) of the second type, wherein the first elastic return means (44) preferably comprises a spring, and/or the second elastic return means (64) preferably comprises a spring, wherein the first elastic return means (44) and the second elastic return means (64) are preferably arranged around the same longitudinal axis (Y1-Y1) of the injector.

5. The combustion chamber (2) according to any one of claims 2 to 4, wherein the opening threshold (S₃) of the dosing member of the injector (5a) of the first type is identical to the opening threshold (S₃) of the dosing member of the injector (5b) of the second type, and/or
wherein the injector (5a) of the first type is configured to inject, in a steady state, a flow rate of fuel that is substantially identical to the flow rate of fuel injected by the injector (5b) of the second type.

6. The combustion chamber (2) according to any one of the preceding claims, wherein the ratio of the value of the second opening threshold (S₂) to the value of the first opening threshold (S₁) is between 1.03 and 1.10.

7. The combustion chamber (2) according to any one of the preceding claims, wherein the injector (5a) of the first type is configured to inject fuel in a cloud (86) having a spray cone angle (β) that is substantially equal to a spray cone angle (α) of a cloud (87) of fuel intended to be injected by the injector (5b) of the second type.

8. The combustion chamber (2) according to any one of the preceding claims, comprising a first injection system (3) into which the injector (5a) of the first type is inserted, and a second injection system (3) into which the injector (5b) of the second type is inserted, wherein each injection system (3) comprises at least one air swirler (32) and a dome (31),
wherein the first injection system (3) is substantially identical to the second injection system (3).

9. A turbomachine comprising a combustion chamber (2) according to any one of the preceding claims, wherein the turbomachine is preferably an aircraft turbomachine.
